# EUROPEAN PATENT APPLICATION

(11) **EP 2 639 564 A1**
(43) Date of publication of application: **18.09.2013**
(21) Application number: 11839568.0
(22) Date of filing: 09.11.2011
(51) Int. Cl.: G01L 9/00

(54) **PRESSURE SENSOR**

(30) Priority: 20.10.2011 JP 2011230501; 10.11.2010 JP 2010251472
(71) Applicant: Panasonic Corporation, Osaka 571-8501 (JP)
(72) Inventor: FUJITA, Koumei, Osaka-shi, Osaka 540-6207 (JP); FUJII, Kenji, Osaka-shi, Osaka 540-6207 (JP); TAKEKAWA, Atsuo, Osaka-shi, Osaka 540-6207 (JP)
(74) Representative: Vigand, Philippe
(86) International application number: PCT/JP2011/006251
(87) International publication number: WO 2012/063477

(57) **Abstract**

A pressure sensor includes a case, a vibrator, a detector, and a processor. The case includes a tubular section and a flat section. The tubular section has a hollow having an opening and is configured to be filled with a target fluid. The flat section closes the hollow. The flat section has a first surface facing the hollow, and a second surface opposite to the first surface. The vibrator is disposed on the second surface of the flat section of the case. The detector outputs a signal according to a vibration of the vibrator. The processor is operable to detect a frequency of the vibration of the vibrator based on the signal output from the detector, and to detect a pressure of the target fluid based on the detected frequency of the vibrator. This pressure sensor has a high sensitivity and excellent characteristics.

## Description

### TECHNICAL FIELD

The present invention relates to pressure sensors to be used in various control devices, e.g. to be used for controlling car engines, suspension systems.

### BACKGROUND ART

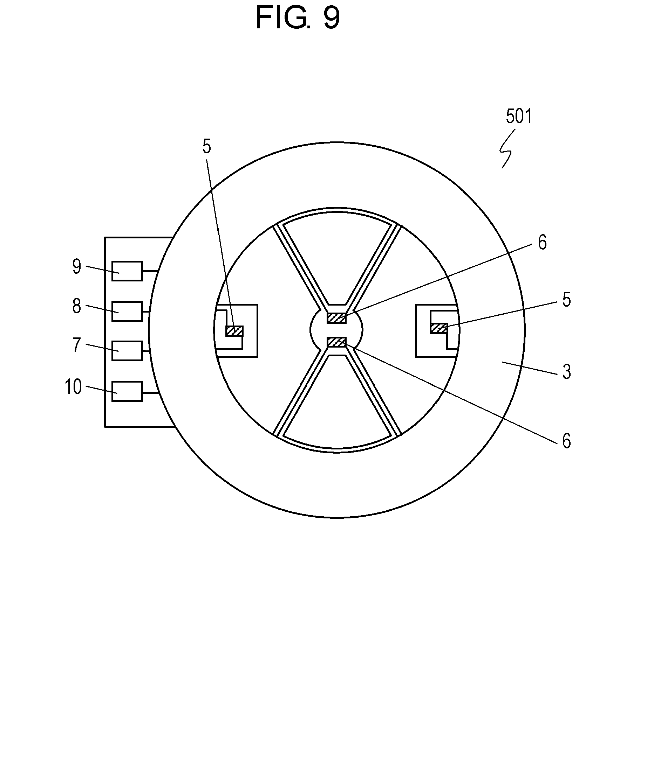

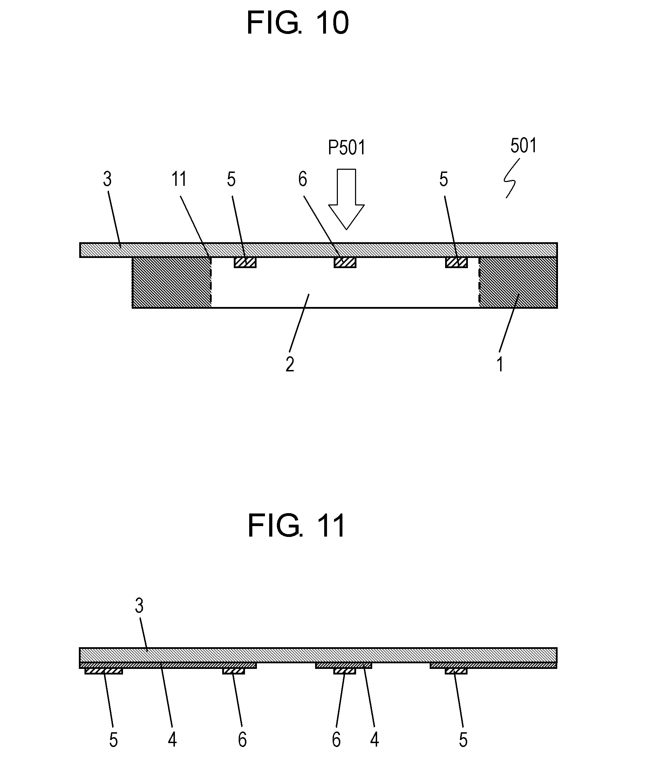

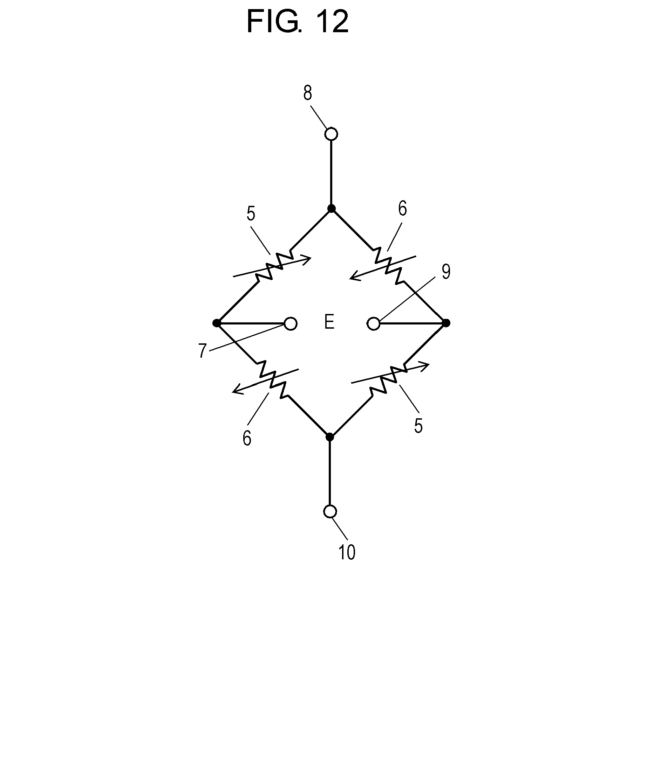

Figs. 9 and Fig. 10 are a top view and a side sectional view of conventional pressure sensor 501, respectively. Fig. 11 is a sectional view of substrate 3, an essential part of pressure sensor 501. Fig. 12 is an electric circuit diagram of pressure sensor 501.

Case 1 made of metal has hollow 2 provided substantially in a center thereof. Substrate 3 is made of flexible material, such as stainless steel, and is disposed on an upper surface of case 1. Insulating layer 4 made of insulating material, such as glass, is disposed on a lower surface of substrate 3. A pair of outer resistors 5 and a pair of inner resistors 6 made of strain-sensitive resistance material, such as ruthenium tetroxide, are disposed on a lower surface of insulating layer 4 and form a bridge circuit. Output terminals 7 and 9, power supply terminal 8, and grounding (GND) terminal 10 are disposed on the lower surface of substrate 3, and are electrically connected to outer resistors 5 and inner resistors 6. Outer resistors 5 are located inside junction 11 where substrate 3 and case 1 are joined together.

A method of manufacturing conventional pressure sensor 501 will be described below.

First, insulating layer 4 is attached onto the lower surface of substrate 3 by immersing substrate 3 into liquid dipping, powder sprinkling, or screen printing, and then, substrate 3 is fired at a high temperature not lower than 900°C. Next, outer resistors 5 and inner resistors 6 are formed on the lower surface of insulating layer 4 by a screen printing method, and then, the resistors are fired at a temperature ranging from 600 to 900°C. Then, terminals 7 to 10 made of metal, such as silver or silver-palladium, are formed on the lower surface of insulating layer 4, and then, the terminals are fired at a temperature ranging from 600 to 900°C. Finally, a periphery of the lower surface of substrate 3 is bonded to the upper surface of case 1 air-tightly and water-tightly with low-melting-temperature glass heated at a temperature ranging from 400 to 600°C.

An operation of conventional pressure sensor 501 will be described below. Pressure P501 is applied onto substrate 3 from above substrate 3 to apply a bending force to substrate 3. At this moment, a compression stress is generated at outer resistors 5, and a tensile stress is applied to inner resistors 6. Tensile stresses increases resistances of the resistors 5 and 6, so that outer resistors 5 have resistances decrease while inner resistors 6 have resistances increase. Outer resistors 5 and inner resistors 6 form the bridge circuit. An external voltage is applied to power supply terminal 8, and an output voltage between out output terminals 7 and 9 is measured, thereby pressure P501 applied to pressure sensor 501 can be measured.

Conventional pressure sensor 501 thus can detect a change of the resistances of outer resistors 5 and inner resistors 6 due to the bending force applied to substrate 3. In the case that substrate 3 has a large thickness to increase the strength of substrate 3, the change of resistances of resistors 5 and 6 accordingly becomes small, and may degrade the sensitivity of sensor 501.

A pressure sensor similar to conventional pressure sensor 501 is disclosed in, e.g. Patent Literature 1.

### CITATION LIST

### PATENT LITERATURE

Patent Literature 1: Japanese Patent Laid-Open Publication No.10-153503

### SUMMARY

A pressure sensor includes a case, a vibrator, a detector, and a processor. The case includes a tubular section and a flat section. The tubular section has a hollow having an opening and is configured to be filled with a target fluid. The flat section closes the hollow. The flat section has a first surface facing the hollow, and a second surface opposite to the first surface. The vibrator is disposed on the second surface of the flat section of the case. The detector outputs a signal according to a vibration of the vibrator. The processor is operable to detect a frequency of the vibration of the vibrator based on the signal output from the detector, and to detect a pressure of the target fluid based on the detected frequency of the vibrator.

This pressure sensor has a high sensitivity and excellent characteristics.

### BRIEF DESCRIPTION OF DRAWINGS

Fig. 1 is an exploded perspective view of a pressure sensor in accordance with Exemplary Embodiment 1 of the present invention.
Fig. 2 is a lateral sectional view of the pressure sensor in accordance with Embodiment 1.
Fig. 3 is a top view of the pressure sensor in accordance with Embodiment 1.
Fig. 4 is a side sectional view of the pressure sensor in accordance with Embodiment 1 for illustrating an operation of the pressure sensor.
Fig. 5 shows frequencies of a vibrator of the pressure sensor in accordance with Embodiment 1.
Fig. 6 is a perspective view of a pressure sensor in accordance with Exemplary Embodiment 2 of the invention.
Fig. 7 is a side sectional view of the pressure sensor in accordance with Embodiment 2.

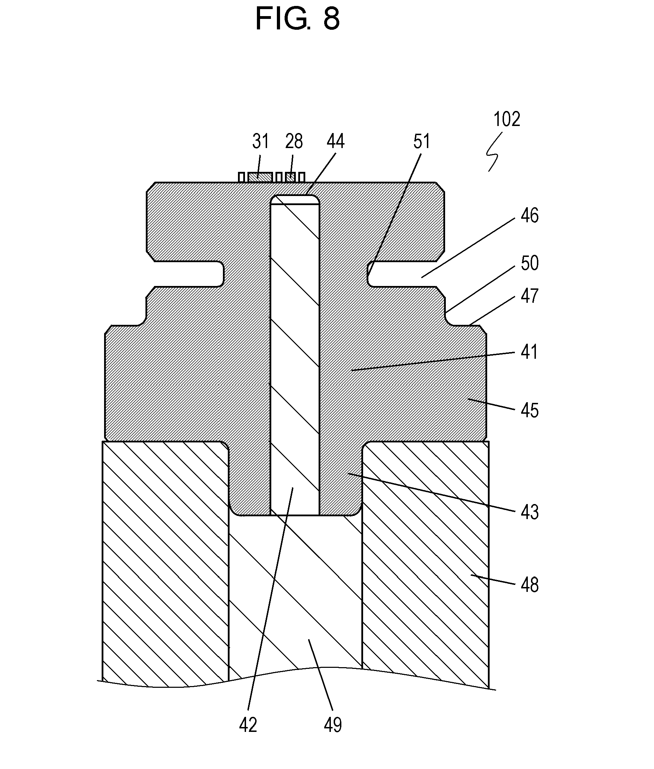

Fig. 8 is a side sectional view of the pressure sensor in accordance with Embodiment 2.
Fig. 9 is a top view of a conventional pressure sensor.
Fig. 10 is a side sectional view of the conventional pressure sensor.
Fig. 11 is a sectional view of a substrate of the conventional pressure sensor.
Fig. 12 is an electric circuit diagram of the conventional pressure sensor.

### DETAIL DESCRIPTION OF PREFERRED EMBODIMENTS

### Exemplary Embodiment 1

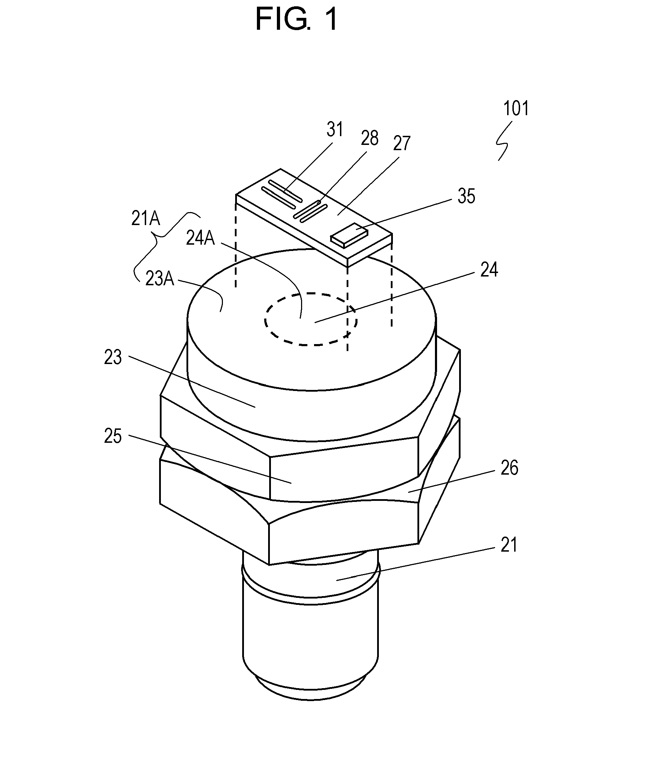

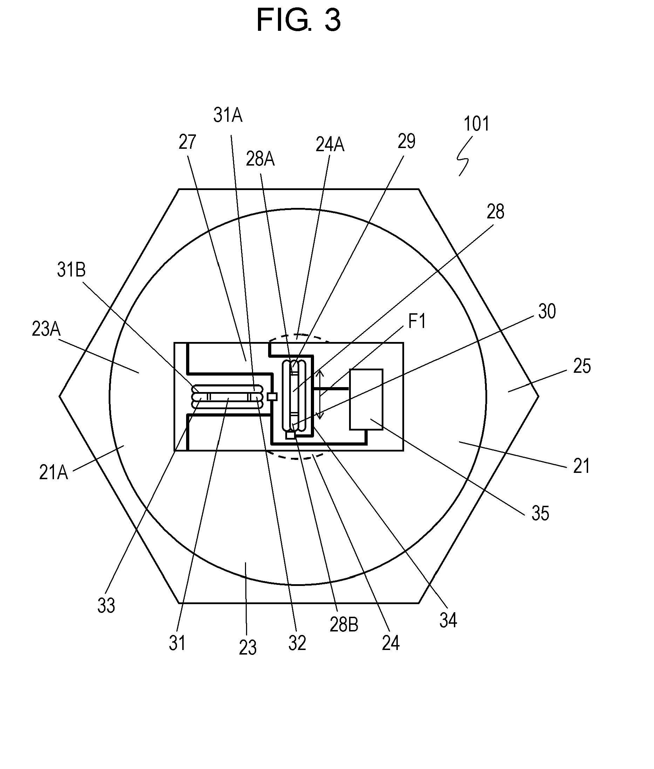

Fig.1, Fig. 2, and Fig. 3 are an exploded perspective view, a side sectional view, and a top view of a pressure sensor in accordance with Exemplary Embodiment 1 of the present invention, respectively.

Case 21 is made of flexible material, such as SUS630, and includes tubular section 23 and flat section 24. Tubular section 23 has hollow 22 therein. Hollow 22 has opening 22A. Flat section 24 closes hollow 22 at an opposite side to opening 22A. Hollow 22 of tubular section 23 extends along center axis 22C. Opening 22A and flat section 24 are located opposite to each other in a direction of center axis 22C. Flat section 24 of case 21 has lower surface 24B facing hollow 22 and upper surface 24A on an opposite side to lower surface 24B.

Upper surface 24A is exposed to the outside of case 21. Tubular section 23 includes end surface 23A located on the opposite side to opening 22A, and also includes thick section 25 around on hollow 22. Thick section 25 protrudes outside, namely, protrudes away from hollow 22. Thick section 25 surrounds an entire circumference of circularly hollow 22 in a circumferential direction perpendicular to center axis 22C. Notch 26 is formed circularly in thick section 25 substantially at a center of thick section 25 along center axis 22C. Strain sensing unit 27 is fixed onto upper surface 21A of case 21, and includes vibrator 28 having a double-supported beam structure. Vibrator 28 is provided above upper surface 24A of flat section 24. Driver 29 and detector 30 are provided on an upper surface of vibrator 28. Each of driver 29 and detector 30 includes a Pt layer disposed on the upper surface of vibrator 28, a PZT layer layered on the Pt layer, and an Au layer layered on the PZT layer. Strain sensing unit 27 includes vibrator 31 having a double-supported beam structure located above edge surface 23A of tubular section 23. Driver 32 and detector 33 are provided on an upper surface of vibrator 31. Each of driver 32 and detector 33 includes a Pt layer disposed on the upper surface of vibrator 31, a PZT layer layered on the Pt layer, and an Au layer layered on the PZT layer. Strain sensing unit 27 includes wiring patterns 34 made of Au. Wiring patterns 34 are electrically connected to driver 29, detector 30 of vibrator 28, and to driver 32 as well as detector 33 of vibrator 31. Strain sensing unit 27 further includes processor 35 implemented by an IC. Processor 35 supplies drive signals to drivers 29 and 32 of vibrators 28 and 31 via wiring patterns 34, thereby vibrating vibrators 28 and 31. Processor 35 processes signals output from detectors 30 and 33 of vibrators 28 and 31, thereby detecting frequencies of vibrations of vibrators 28 and 31.

A method for manufacturing pressure sensor 101 in accordance with Embodiment 1 will be described below.

First, a rod made of SUS630 is first prepared, and is cut to provide case 21 with hollow 22, thick section 25, and notch 26.

Next, wiring patterns 34 made of Au are vapor-deposited on an upper surface of a semiconductor substrate, and then, Pt is deposited on places where driver 29 and detector 30 of vibrator 28 as well as driver 32 and detector 33 of vibrator 31 are to be formed.

Then, PZT is deposited on an upper surface of the Pt, and then, Au is deposited thereon, thereby forming driver 29 and detector 30 on the upper surface of vibrator 28, and simultaneously forming driver 32 and detector 33 on the upper surface of vibrator 31.

Next, processor 35 implemented by the IC is placed on the upper surface of semiconductor substrate, and is connected via wiring patterns 34 with drivers 29 32 and detectors 30 and 33 of vibrators 28 and 31, thereby providing strain sensing unit 27.

Finally, strain sensing unit 27 is attached onto upper surface 21A of case 21, namely, upper surface 23A of tubular section 23 and upper surface 24A of flat section 24, thereby providing pressure sensor 101.

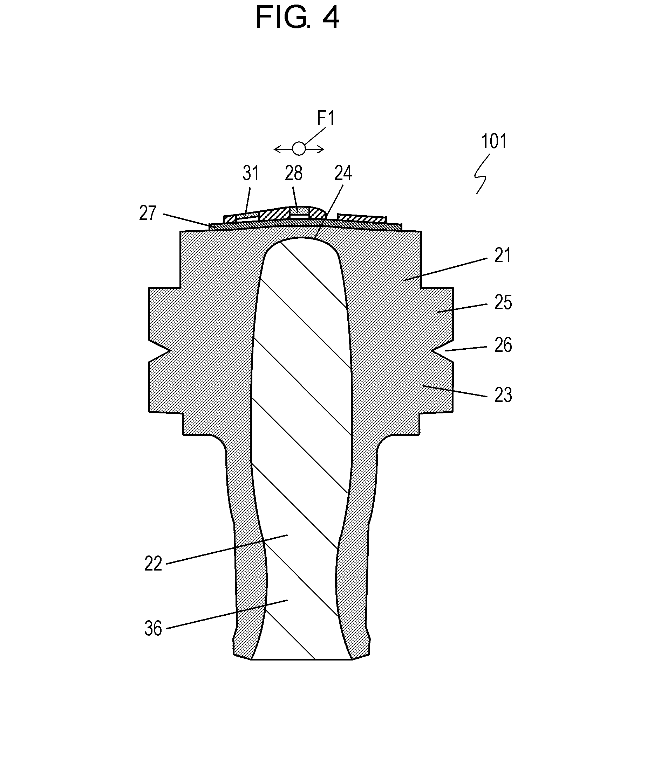

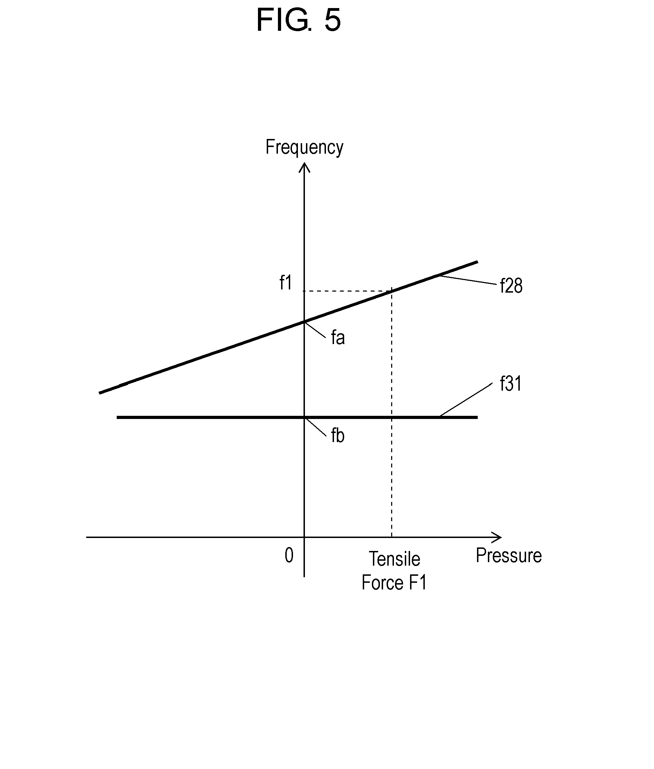

An operation of pressure sensor 101 in accordance with Embodiment 1 will be described below. Fig. 4 is a side sectional view of pressure sensor 101 for illustrating the operation of pressure sensor 101. Fig. 5 shows frequencies f28 and f31 of the vibrations of vibrators 28 and 31.

Processor 35 applies, to driver 29 of vibrator 28., an alternating-current (AC) voltage having a frequency substantially equal to natural frequency fa of vibrator 28, and applies, to driver 32 of vibrator 31, an AC voltage having a frequency substantially equal to natural frequency fb of vibrator 31. Then, vibrator 28 vibrates like a string at natural frequency fa while both ends 28A and 28B are fixed. Vibrator 31 also vibrates like a siring at natural frequency fb while both ends 31A and 31B are fixed. In this situation, detector 30 of vibrator 28 outputs a signal having frequency fa, and processor 35 processes this signal to detect frequency fa. Detector 33 of vibrator 31 outputs a signal having frequency fb, and processor 35 processes this signal to detect frequency fb. As shown in Fig. 4, hollow 22 of case 21 is configured to be filled with target fluid 36 through opening 22A. According to Embodiment 1, target fluid 36 is liquid; however, can be another fluid, such as gas. As having the pressure increase, target fluid 36 bulges flat section 24 upward to increase the volume of hollow 22, thus applying tensile force F1 to strain sensing unit 27 via upper surface 24A. As shown in Fig. 5, frequency f28 of the vibration of vibrator 28 of strain sensing unit 27 increases from natural frequency fa to frequency f1 accordingly. The signal output from detector 30 of vibrator 28 has frequency f28. Processor 35 processes the signal to obtain a change of the frequency, i.e. the difference between frequency fa (f28) and frequency f1. The pressure of target fluid 36 filling case 21 can be detected bade on this change.

The change in ambient temperature of pressure sensor 101 may cause a change of natural frequency fa of vibrator 28. Pressure sensor 101 in accordance with Embodiment 1 includes vibrator 31 located away from upper surface 24A of flat section 24. This structure prevents tensile force F1 from being applied to vibrator 31 even if the pressure of target fluid 36 increases. Thus, the change in the pressure hardly changes frequency f31 of vibrator 31 from natural frequency fb, as shown in Fig. 5. In other words, vibrator 31 vibrates at natural frequency fb regardless of the pressure of target fluid 36. Frequencies f28 and f31 of vibrators 28 and 31 change according to temperature. The change in frequency f31 is caused not by tensile force F1 but by a change in the ambient temperature, thus allowing the temperature to be detected based on the change in frequency f31. Processor 35 can correct the amount of the change in the output signal, caused by the change in the temperature, based on the change in frequency f31, by using an output signal according to the pressure detected based on frequency f28 of vibrator 28.

Upper surface 21A of case 21 includes upper surface 24A of flat section 24 and edge surface 23A of tubular section 23. Edge surface 23A is solidly connected with upper surface 24A of flat section 24. Vibrator 28 is fixed with respect to case 21 at both ends 28A and 28B. Vibrator 31 is fixed with respect to case 21 at both ends 31A and 31B. To be more specific, both ends 28A and 28B of vibrator 28 are fixed with respect to upper surface 24A of flat section 24. This structure allows vibrator 28 to receive tensile force F1 caused by the deformation of flat section 24 produced by the pressure of target fluid 36. End 31A of vibrator 31 is fixed with respect to upper surface 24A of flat section 24 while end 31B is fixed with respect to edge surface 23A of tubular section 23. End 31A may be fixed with respect to edge surface 23A of tubular section 23. This structure prevents vibrator 31 from receiving the tensile force even if flat section 24 deforms, hence disabling frequency f31 of vibrator 31 to change.

As described above, pressure sensor 101 is configured to detect the pressure of target fluid 36. Tubular section 23 has hollow 22 configured to be filled with target fluid 36. Hollow 22 has opening 22A. Flat section 24B closes hollow 22. Flat section 24 has surface 24B facing hollow 22, and surface 24A opposite to surface 24B. Vibrator 28 is disposed on surface 24A of flat section 24 of case 21. Driver 29 and detector 30 that outputs a signal according to the vibration of vibrator 28 are disposed on vibrator 28. Processor 35 supplies a drive signal to driver 29 to vibrate vibrator 28, and detects the frequency of a vibration of vibrator 28 based on the signal output from detector 30. Processor 35 is operable to detect a pressure of target fluid 36 based on the detected frequency of the vibration of vibrator 28.

Driver 32 is provided at vibrator 31. Detector 33 is provided at vibrator 31 and outputs a signal according to the vibration of vibrator 31. Processor 35 supplies a drive signal to driver 32 as to vibrate vibrator 31, and detects the frequency of the vibration of vibrator 31 based on the signal output from detector 33. Processor 35 is operable to detect the pressure of target fluid 36 based on the detected frequencies of vibrators 28 and 31. Vibrator 31 is located away from surface 24A of flat section 24.

Pressure sensor 101 in accordance with Embodiment 1 allows vibrator 28 to change frequency f28 according to the pressure of target fluid 36 even if flat section 24 has a large thickness for the purpose of reinforcing flat section 24. The strength of pressure sensor 101 can be thus increased while the output sensitivity is improved.

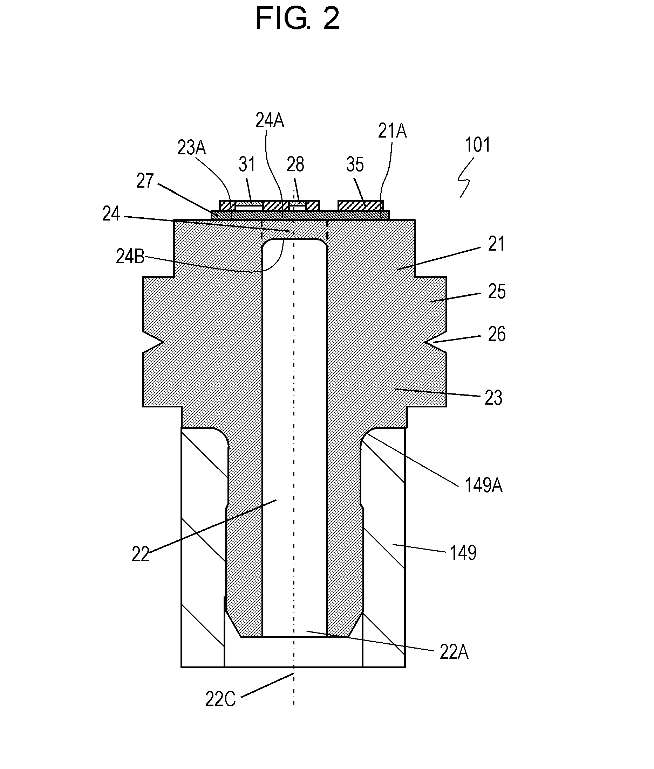

As shown in Fig. 2, pressure sensor 101 is configured to be mounted to objective member 149 while tubular section 23 is inserted into opening 149A of objective member 149 for sensor 101 to be mounted thereto.

Pressure sensor 101 includes thick section 25 protruding outward from tubular section 23 of case 21. Thick section 25 has notch 26 provided therein. This structure prevents the stress produced when sensor 101 is mounted from transmitting to vibrators 28 and 31. As a result, pressure sensor 101 allows vibrator 28 to accurately detect only the pressure of target fluid 36 filling hollow 22.

### Exemplary Embodiment 2

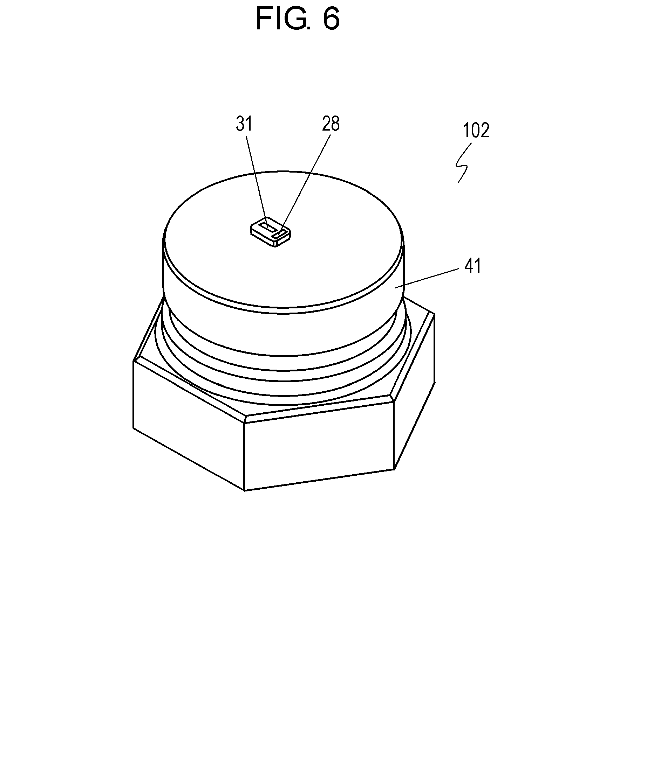

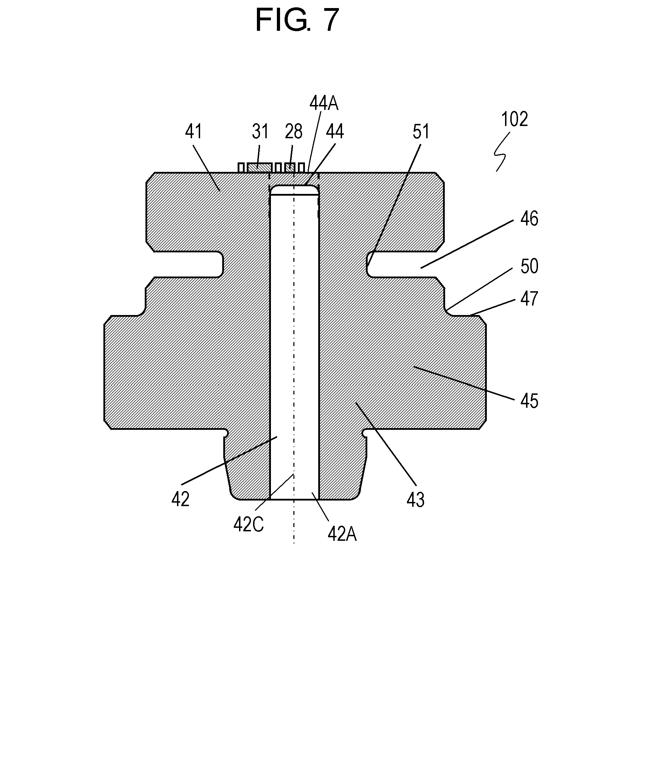

Fig. 6 and Fig. 7 are a perspective view and a side sectional view of pressure sensor 102 in accordance with exemplary Embodiment 2. In Figs. 6 and 7, components identical to those of pressure sensor 101 shown in Figs. 1 and 2 are denoted by the same reference numerals. Pressure sensor 102 includes case 41 instead of case 21 of pressure sensor 101.

Case 41 is made of flexible material, such as carbon steel, e.g. S45C. Case 41 includes tubular section 43 and flat section 44. Tubular section 43 has hollow 42. Hollow 42 has opening 42A. Flat section 44 closes hollow 42 at the opposite side to opening 42A. Hollow 42 of tubular section 43 extends along center axis 42C. Opening 42A and flat section 44 are located opposite to each other in a direction of center axis 42C. Flat section 44 has upper surface 44A exposed to the outside of case 41. Tubular section 43 includes thick section 45 around hollow 42. Thick section 45 protrudes outside, namely, protrudes away from hollow 42. Thick section 45 surrounds an entire of hollow 42 in a circumferential direction perpendicular to center axis 42C. Groove 46 is formed in thick section 45 substantially at a center of thick section 45 along center axis 42C to surround circumferentially center axis 42C. Step section 47 is provided in the case below groove 46 of thick section 45, namely, is located on the opposite side to flat section 46 with respect to groove 46.

In pressure sensor 102 in accordance with Embodiment 2, tubular section 43 includes thick section 46 protruding outward. Groove 46 is provided in an entire circumference of thick section 46. Groove 46 prevents the stress produced when sensor 102 is mounted to objective member 48 from transmitting to vibrators 28, 31. As a result, pressure sensor 102 allows vibrator 28 to accurately detect only the pressure of target fluid 49 filling hollow 42. According to Embodiment 2, target fluid 49 is liquid; but may be another fluid, such as gas.

When pressure sensor 102 is mounted to objective member 48, thick section 45 deforms mainly at two stages, valley 50 of step section 47 and bottom 51 of groove 46. As a result, the stress produced during the mounting of sensor 102 can be further absorbed by thick section 45. This structure allows vibrator 28 to accurately detect only the pressure of target fluid 49 filling hollow 42.

In Embodiments 1 and 2, terms indicating directions, such as "upper surface", "lower surface", and "above", indicate relative directions depending on positional relation between components, such as the case, the strain sensing unit, of the pressure sensor, and do not indicate absolute directions, such as a vertical direction.

### INDUSTRIAL APPLICABILITY

The pressure sensor according to the present invention has high sensitivity and excellent characteristics, and is useful for various control devices, and for controlling car engines as well as suspension systems.

### DESCRIPTIONS OF REFERENCE MARKS

- 21, 41: Case
- 22, 42: Hollow
- 23, 43: Tubular Section
- 24, 44: Flat Section
- 24A: Upper Surface (Second Surface) of Flat Section
- 24B: Lower Surface (First Surface) of Flat Section
- 25, 45: Thick Section
- 26: Notch
- 28: Vibrator (First Vibrator)
- 29: Driver (First Driver)
- 30: Detector (First Detector)
- 31: Vibrator (Second Vibrator)
- 32: Driver (Second Driver)
- 33: Detector (Second Detector)
- 35: Processor
- 36: Target Fluid
- 46: Groove
- 47: Step Section

## Claims

1. A pressure sensor configured to detect a pressure of a target fluid, the pressure sensor comprising:
a case including
a tubular section having a hollow having an opening, the hollow being configured to be filled with the target fluid;
a flat section closing the hollow, the flat section having a first surface and a second surface opposite to the first surface, the first surface of the flat section facing the hollow;
a first vibrator disposed on the second surface of the flat section of the case;
a first driver disposed at the first vibrator;
a first detector disposed at the first vibrator for outputting a signal according to a vibration of the first vibrator; and
a processor operable to
input a drive signal to the first driver as to vibrate the first vibrator,
detect a frequency of the vibration of the first vibrator based on the signal output from the first detector, and
detect a pressure of the target fluid based on the detected frequency of the first vibrator.

2. The pressure sensor of claim 1 further comprising:
a second vibrator;
a second driver disposed at the second vibrator; and
a second detector disposed at the second vibrator for outputting a signal according to a vibration of the second vibrator;
wherein the processor is operable to
input a drive signal to the second driver as to vibrate the second vibrator,
detect a frequency of the vibration of the second vibrator based on the signal output from the second detector, and
detect the pressure of the target fluid based on the detected frequency of the first vibrator and the detected frequency of the second vibrator.

3. The pressure sensor of claim 2, wherein the second vibrator is disposed at the case and located away from the second surface of the flat section.

4. The pressure sensor of claim 1, wherein the case further includes a thick section protruding outward from the tubular section, and the thick section has a notch therein.

5. The pressure sensor of claim 1, wherein the case further includes a thick section protruding outward from the tubular section, and the thick section has a groove in an entire circumference thereof.

6. The pressure sensor of claim 5, wherein the thick section has a step section.
